# EUROPEAN PATENT APPLICATION

(11) **EP 1 693 627 A1**
(43) Date of publication of application: **23.08.2006**
(21) Application number: 04820142.0
(22) Date of filing: 30.11.2004
(51) Int. Cl.: F24F 3/14, F25B 9/00, F25D 17/06, H02K 16/02

(54) **AIR CONDITIONING SYSTEM**

(30) Priority: 09.12.2003 JP 2003409964
(71) Applicant: EARTHSHIP K.K., Bunkyo-ku, Tokyo 1130033 (JP)
(72) Inventor: MIWA, Hiroshi, Suita-shi, Osaka 5640013 (JP); HANAWA, Masanori, Sapporo-shi, Hokkaido 0050861 (JP)
(74) Representative: Schöniger, Franz-Josef
(86) International application number: PCT/JP2004/017750
(87) International publication number: WO 2005/057087

(57) **Abstract**

[PROBLEMS]

To provide a cooling system in which the efficiency of a refrigerator will not decrease in obtaining a predetermined temperature and humidity in a cooled room even when there is a change in the outside temperature and so on.

[MEANS FOR SOLVING]

An air conditioning system comprising a dehumidifier, a compressor into which a first air is introduced, a heat exchanger into which the first air compressed by the compressor is introduced, and an expander into which the first air heat-exchanged by the heat exchanger is introduced and which is connected with the compressor through a connection mechanism, wherein moisture content of a dehumidifying agent in the dehumidifier is decreased by a second air heat-exchanged with the first air by the heat exchanger.

## Description

### TECHNICAL FIELD

The present invention relates to an air cycle refrigerator utilizing air as an operating medium, to be applied in the fields of air conditioning, refrigeration and cold storage, and in particular, to a cooler equipped with a dehumidifier.

### BACKGROUND ART

Conventionally, typical refrigeration cycles have been composed using refrigerants such as Freon and ammonia, and such refrigerants have been circulated in a closed cycle. The most widely used Freon-based refrigerants are environmental disruptors and require a high pressure of 15 to 20 kg/cm² in order to form a refrigerating cycle. Therefore, refrigerators and heat pump units are composed in specifications with emphasis on leakproofing and pressure resistance for the whole system, and various types based on such specifications are practically in use.

On the other hand, techniques are known for obtaining low-temperature air by compressing, cooling and adiabatically expanding air itself without the use of a refrigerant based on an environmental disruptor such as Freon. Examples of improved compressors and expanders include those proposed in Japanese Unexamined Patent Publications No. 1993-113258 and No. 1994-213521 and Japanese Examined Patent Publication No. 1984-52343. Examples of improved airborne moisture content separations include those proposed in Japanese Unexamined Patent Publications No. 1994-34212 and No. 1993-223377. Examples of controls for apparatuses include those disclosed in Japanese Unexamined Patent Publications No. 1988-315866, No. 1993-231732, No. 1993-223375 and No. 1990-97850. In addition, examples of heat recoveries include those proposed in Japanese Unexamined Patent Publications No. 1994-207755 and No. 1994-213521.

An apparatus in the field relevant to the present invention is a refrigerating and cooling apparatus in which a compressor, an expander and a motor are coupled via a gear or the like to be driven, in order to compose an air cycle refrigerator for compressing air, cooling the air by a heat source of outside air and then recovering the cooled heat in a refrigerated room by a conventional plate type heat exchanger, as disclosed in Reference 1.

Also as disclosed in Reference 2, an example exists in which high-temperature waste heat generated in an air cycle refrigerator is used as a regenerated heat energy for drying a dehumidification rotor of a dehumidifying and air conditioning apparatus, which is proposed for overcoming the disadvantage of lower efficiency in an air conditioning temperature region associated with the air cycle refrigerator compared to a conventional vapor compressing refrigerator. In Reference 2, as a method of recovering the high-temperature waste heat to utilize it as a heat source for the dehumidification rotor of the dehumidifying and air conditioning apparatus, high-temperature air at the exit of a compressor of the air cycle refrigerator which supplies air reduced in temperature in an expander into a room is used and returned air from inside the room is heated in a heat exchanger to make high-temperature air to be supplied for drying the dehumidification rotor.
Patent Reference 1: Japanese Unexamined Patent Publication No. 1997-210484
Patent Reference 2: Japanese Unexamined Patent Publication No. 2000-257968

In the invention disclosed in Reference 1, when the temperature of a refrigerated room (load) needs to be changed, the revolution of a motor and the revolutions of a centrifugal air compressor and a centrifugal air expander both directly coupled to the motor are altered so that the pressure ratio between the compressor and the expander may be altered, thereby to change the temperature of the air blow from the expander for obtaining a desired temperature in the refrigerated room (See Fig. 3 of Reference 1). At this time, the compressor and the expander rotate at revolutions defined by the revolution of the motor and the amount of air flow is determined based on the pressure ratio depending thereon. However, the compressor and the expander in essence have the pressure ratio and flow rates, at which the highest efficiency is attained, which are determined at predetermined revolutions. With a principle as in Reference 1, therefore, one or either of the compressor and the expander will not operate at an operating point at which the optimum efficiency is attained, with a result that the performance coefficient of the air cycle refrigerator will decrease.

In the invention disclosed in Reference 1, when the outside air temperature changes, the temperature of the air led from a water-to-air heat exchanger to an air-to-air heat exchanger will change, so that the temperature at the entrance to the expander may change. Consequently the blowing temperature of the expander changes so that the temperature of the cooled room to be cooled may change. To avoid that, by altering the revolution of the motor to alter the compression ratio between the compressor and the expander, the blowing temperature of the expander is changed to obtain a desired temperature, with a result, however, that the performance coefficient of the air cycle refrigerator will decrease as described above.

In the invention disclosed in Reference 2, in order to accommodate the variation of load of the air-conditioned room while heating the returned air from inside the room at the exit of the compressor with high-temperature air using a typical heat exchanger, control is provided for increasing or decreasing the electric power supplied to the motor of the air cycle refrigerator to alter the revolution of the compressor to thereby increase or decrease the compression ratio and the amount of air flow, so that the temperature of the air-conditioned room may be maintained at a constant level. In so doing, since the returned air from inside the room increases or decreases according to an increase or decrease of the flow rate of the air, the air temperature attained by heat exchange at the entrance to the expander and the regenerated air temperature to be sent to the dehumidification rotor will change.

When the air temperature at the entrance to the expander changes, the air temperature at the exit of the expander will also increase or decrease and, in association with an increase or decrease of the revolution of the compressor, the revolution of the expander directly coupled to the compressor will also change, so that the exit temperature of the expander may change. The temperature of the air to be supplied to the air-conditioned room can therefore not be maintained at a constant level. When the temperature of the regenerated air changes, the amount of dehumidification by the dehumidification rotor will increase or decrease, with a defect that the humidity of the air supplied to the air-conditioned room may not be maintained at a constant level.

Also, this system has a disadvantage that since it leads all the air to be dehumidified into the dehumidification rotor, a huge dehumidification rotor must be adopted and the system must be bulky with an increase in cost, in addition to the difficulty of regulating humidity in relation to the air conditioning load variation as described above.

In addition, this system is only utilized for air conditioning and may not be provided for cooling down to lower temperature regions, such as in refrigeration and cold storage.

In a refrigerated warehouse or coldroom, opening and closing the door during operation will allow air having a temperature higher than the temperature inside to infiltrate to cause dew condensation in case of a coldroom having a temperature higher than zero degree Celsius and to cause icing in case of a refrigerated cold storage warehouse having a temperature at or lower than zero degree Celsius. According to the prior art, what was adopted to prevent that was a principle of feeding dried air at a temperature higher than the temperature inside the warehouse by means of a heat-driven desiccant air conditioner, for example. As such, there was a drawback that an extra energy was needed to provide the dried air and, in addition, an increase in the capacity of the refrigerator was needed to provide for a sensible heat load of the dried air having a high temperature.

### DISCLOSURE OF THE INVENTION

### PRROBLEMS TO BE SOLVED BY THE INVENTION

The present invention is intended to provide a cooling system in which the efficiency of a refrigerator will not decrease in obtaining a predetermined temperature and humidity in a cooled room even when there is a change in the outside air temperature and so on.

The present invention is also intended to provide a cooling system in which dew condensation or icing will not occur inside even when humid outside air enters a cold storage warehouse through its door or clearances.

### MEANS FOR SOLVING THE PROBLEMS

In order to solve such problems for providing an air cycle refrigerating/air conditioning apparatus which accommodates load variation of a cooled room as required and obtains a predetermined temperature and humidity, unaffected by the variation of the outside air, the following measures are resorted to.

According to the present invention, a compressor and an expander of an air cycle refrigerator are configured to rotate freely. This is enabled, for example, by using a generator motor as an electric motor for driving the compressor and the expander of the air cycle refrigerator.

In addition, according to the present invention, it may be realized by forming a motor for receiving power generated in the expander and driving the compressor in a double structure to thereby physically separate the shafts of the compressor and the expander. For example, the shaft of the expander comprises a rotor of a generator section and the shaft of the compressor comprises a rotor of a motor section. Further, stators of the generator and motor sections may be integrated and a generator motor may be provided for supplying the motor section with the electric power generated by the power of the expander and the externally supplied electric power.

By these approaches, externally supplied electric power will not be relied on in order to obtain a required temperature in a cooled room and the compressor and the expander will rotate at revolutions with the optimum efficiency, thereby each operating at an operating point with the optimum efficiency so that performance coefficient of the air cycle refrigerator may not decrease.

Also, according to the present invention, an intermediate medium is interposed between a cooled heat-recovering heat exchanger and a waste heat-recovering heat exchanger of the air cycle refrigerator to control the amount of heat exchange. By interposing the intermediate medium between the cooled heat-recovering heat exchanger and the waste heat-recovering heat exchanger/cooled heat exchanger, even if the temperature of the outside air as a cooling fluid or the returned air from the cooled room varies, by changing the flow rate of the intermediate medium, the revolution of the expander having the optimum efficiency may be obtained and the humidity of the air to be fed to the cooled room may be controlled, by controlling the air temperature at the entrance to the expander, of which flow rate and temperature change due to load variation, to bring the temperature of the blow of the expander to a desired value, irrespective of the revolution of the expander, to control the temperature of the air to be fed to the air-conditioned room in the former heat exchanger and by cooling or heat-recovering the high-temperature air at the exit of the compressor, of which temperature changes if the outside air temperature changes, to feed air having a constant temperature to the cooled heat-recovering heat exchanger, irrespective of the revolution of the compressor, to feed air having the optimum temperature to the expander in the latter heat exchanger.

According to the present invention, the air cycle refrigerator is provided with a dehumidifier (dehumidification rotor) capable of controlling a regeneration temperature and the amount of dehumidification and a dehumidifier capable of controlling the amount of dehumidification by switch control of a damper to control the humidity of the cooled room. Preferably, in the air cycle refrigerator having the dehumidification rotor provided upstream the compressor and the dehumidifier provided downstream the expander, an intermediate medium is provided in the waste heat-recovering heat exchanger/cooled heat exchanger which cools the high-temperature air released from the compressor with outside air for heat recovery or cooling, to change the flow rate of the intermediate medium to alter the amount of heat exchange, to recover the heat from the high-temperature air at the exit of the compressor whose flow rate and temperature will change due to the load variation or outside air temperature variation, and to obtain a desired regenerated air temperature of the dehumidification rotor irrespective of the revolution of the compressor, so that the amount of dehumidification is controlled and the humidity of the air to be fed to the cooled room is controlled and so that, in addition, when the exit air temperature of the expander falls below zero to generate snow or ice, the dehumidifier having a filter with bypassing mechanism is used to remove part of it and feed the air having a desired humidity to the cooled room to control the humidity of the cooled room.

If, however, the dehumidification rotor can absorb moisture content at or below the dew point of the low-temperature air at the location of the dehumidifier, the provision of the dehumidifier is unnecessary. Examples of such a performance dehumidification rotor include a multistage adsorption rotor using zeolite.

Part of the outside air to be flowed into an air compressor or the air mixed with the outside air recovered from inside the room is mixed upstream the air compressor, bypassing the dehumidification rotor, so that a large dehumidification rotor may be downsized to reduce the size of the system and the cost.

According to the present invention, the air cycle refrigerator is provided with a dehumidification rotor capable of controlling a regeneration temperature to control the amount of dehumidification and a dehumidifier capable of controlling the amount of dehumidification to supply dried air obtained to a warehouse. The air cycle refrigerator for introducing low-temperature air into a refrigerated/cold storage warehouse is provided with a cooled heat-recovering heat exchanger having as a heat-exchanging medium an intermediate medium whose flow rate is controlled in order to withstand load variation of the warehouse as described before and an waste heat-recovering heat exchanger having as a heat-exchanging medium an intermediate medium whose flow rate is controlled for heating outside air by high-temperature air obtained at a compressor, to utilize the heated air for a regeneration heat source for the dehumidification rotor so that the air obtained having a low humidity is fed to the high-temperature refrigerating/cold storage warehouse where dew condensation is likely to occur because of infiltration of the outside air for providing for the humidity load. Also, the low-temperature air blown from the air cycle refrigerator is passed through the dehumidifier capable of controlling the amount of dehumidification and fed into a low-temperature refrigerating and cold storage warehouse where icing is likely to occur for preventing such icing.

More specifically, the present invention relates to an air conditioning system comprising a compressor into which a first air is introduced, a heat exchanger into which the first air compressed by the compressor is introduced, and an expander into which the first air heat-exchanged by the heat exchanger is introduced and which is connected with the compressor through a connection mechanism, the air conditioning system further comprising a dehumidifier therewithin, wherein moisture content of a dehumidifying agent in the dehumidifier is decreased by a second air heat-exchanged with the first air by the heat exchanger. The location of the dehumidifier (dehumidification rotor) is not particularly limited and may be before the introduction to the compressor, after the introduction to the compressor and before the introduction to the heat exchanger, after the introduction to the heat exchanger and before the introduction to the expander or after the introduction to the expander, and may preferably be before the introduction to the compressor, after the introduction to the compressor and before the introduction to the heat exchanger or after the introduction to the heat exchanger and before the introduction to the expander. Most preferably, the first air dehumidified by the dehumidifier is introduced into the compressor. In addition, the installation number of dehumidifiers (dehumidification rotors) is not limited to one and multiple dehumidifiers may be provided at multiple locations.

The present invention relates to an air conditioning system comprising a compressor into which a first air is introduced, a heat exchanger into which the first air compressed by the compressor is introduced, and an expander into which the first air heat-exchanged by the heat exchanger is introduced and which is connected with the compressor through a connection mechanism, the air conditioning system further comprising a dehumidifier therewithin, wherein an air having a temperature lower than the temperature of the first air is mixed with the first air before the first air is introduced into the compressor. Preferably, the first air dehumidified by the dehumidifier is introduced into the compressor.

The present invention relates to an air conditioning system comprising a compressor into which a first air is introduced, a heat exchanger into which the first air compressed by the compressor is introduced, and an expander into which the first air heat-exchanged by the heat exchanger is introduced and which is connected with the compressor through a connection mechanism, the air conditioning system further comprising a dehumidifier therewithin and a selector valve for selectively introducing into a space to be air-conditioned either a second air heat-exchanged with the first air by the heat exchanger or the first air exhausted from the expander. Preferably, the first air dehumidified by the dehumidifier is introduced into the compressor.

The present invention relates to an air conditioning system comprising a first compressor into which a first air is introduced, a first heat exchanger into which the first air compressed by the first compressor is introduced, and a first expander into which the first air heat-exchanged by the first heat exchanger is introduced and which is connected with the first compressor through a connection mechanism, the air conditioning system further comprising a second compressor into which a third air is introduced, a second heat exchanger into which the third air compressed by the second compressor is introduced, a second expander into which the third air heat-exchanged by the second heat exchanger is introduced and which is connected with the second compressor through a connection mechanism, first and second dehumidifying freezers, into which the first air expanded by the first expander and the third air expanded by the second expander may be introduced, and which are configured to be capable of mixing the first air and the third air to solidify moisture content contained in the air mixed, and a selector valve for enabling either one of the first and second dehumidifying freezers to operate. It is preferable that heat generated in the air conditioning system is utilized to thaw moisture content solidified in one of the dehumidifying freezers that is not in operation. It is also preferable that the air conditioning system further comprises a dehumidifier and moisture content of a dehumidifying agent in the dehumidifier is decreased by the second air heat-exchanged with the first air by the first heat exchanger. In order to thaw moisture content solidified in the dehumidifying freezers, heat generated in the air conditioning system (preferably waste heat) for example, the heat from a second air heat-exchanged with the first air by the first heat exchanger or the heat from air heat-exchanged with the third air by the second heat exchanger is utilized. In the best mode to be described below, waste heat from a cooled heat-recovering heat exchanger is utilized; however, waste heat from a waste heat-recovering heat exchanger may be utilized. In addition, there may be two or more dehumidifying freezers.

The connection mechanism of the air conditioning system according to the present invention preferably comprises a stator in common to the compressor and the expander, a first shaft inserted into the stator through the compressor, and a second shaft through the expander, capable of rotating at a rotation speed different from that of the first shaft inserted into the stator. Also, at least part of electric power generated at the stator by the rotation of the second shaft may be supplied to the stator for the rotation of the first shaft.

Japanese Patent Application No. 2003-409964, on which this application is based, is in its entirety to be incorporated herein by reference.

### BEST MODE FOR CARRING OUT THE INVENTION

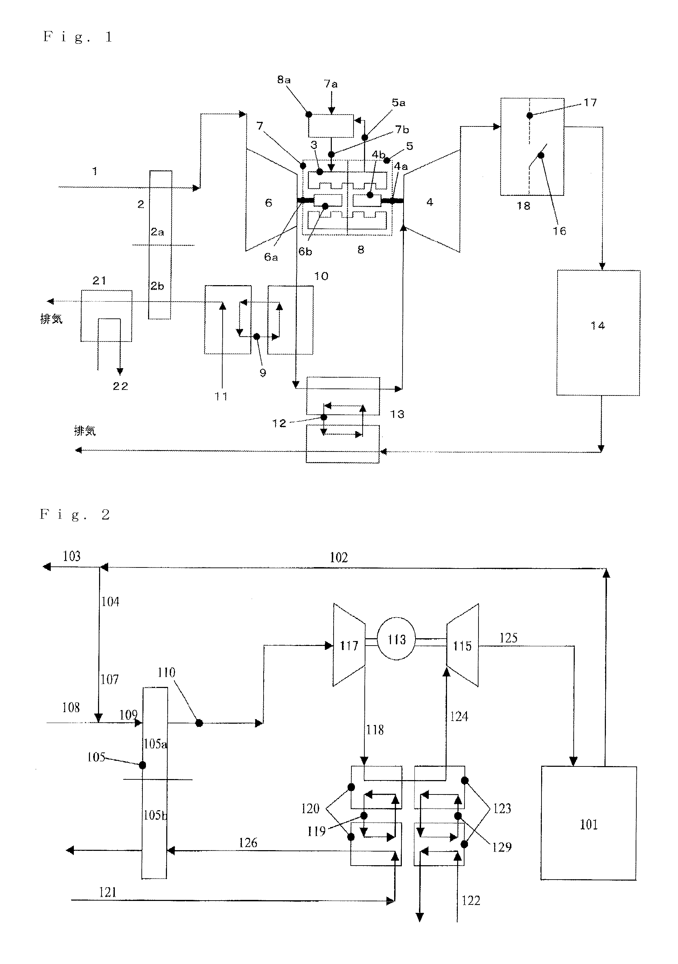

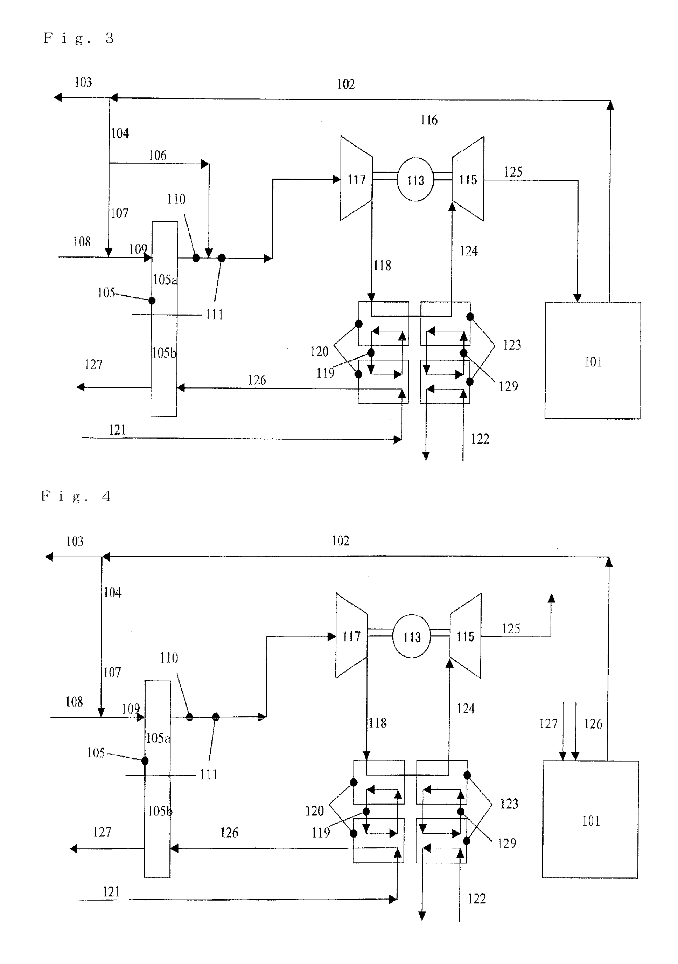

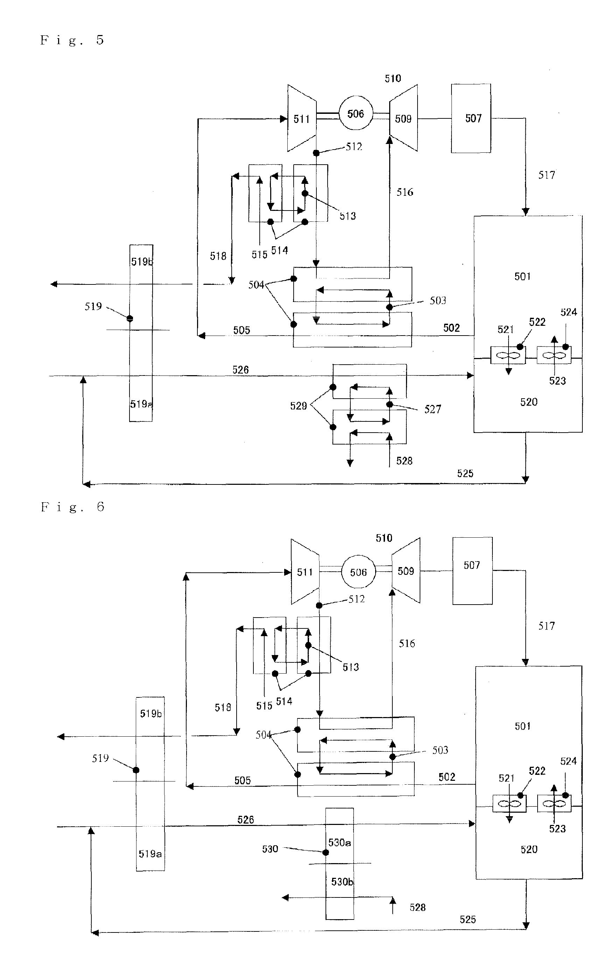

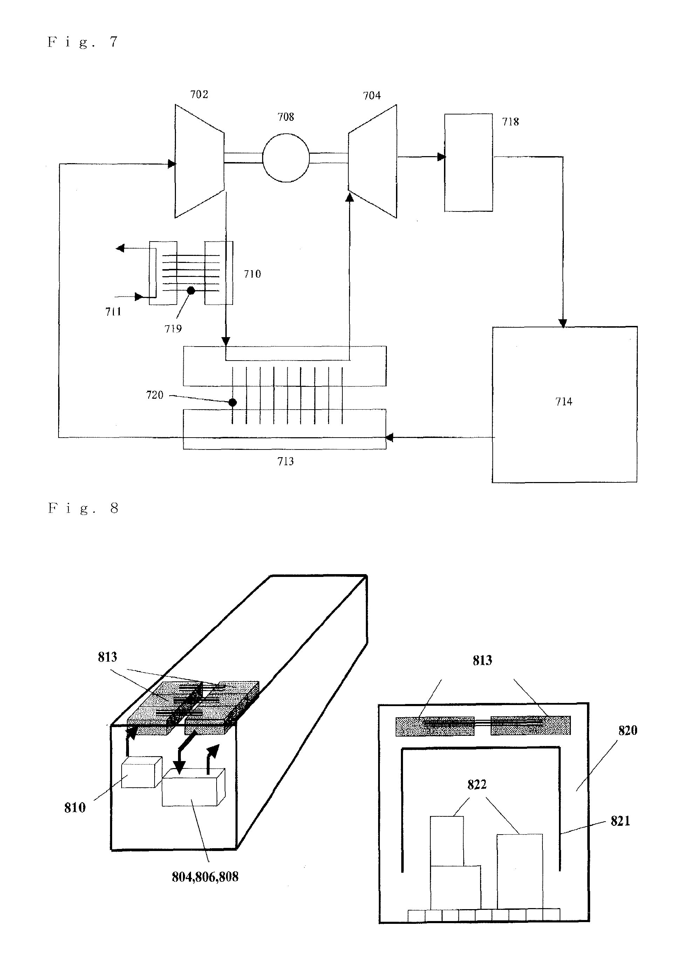

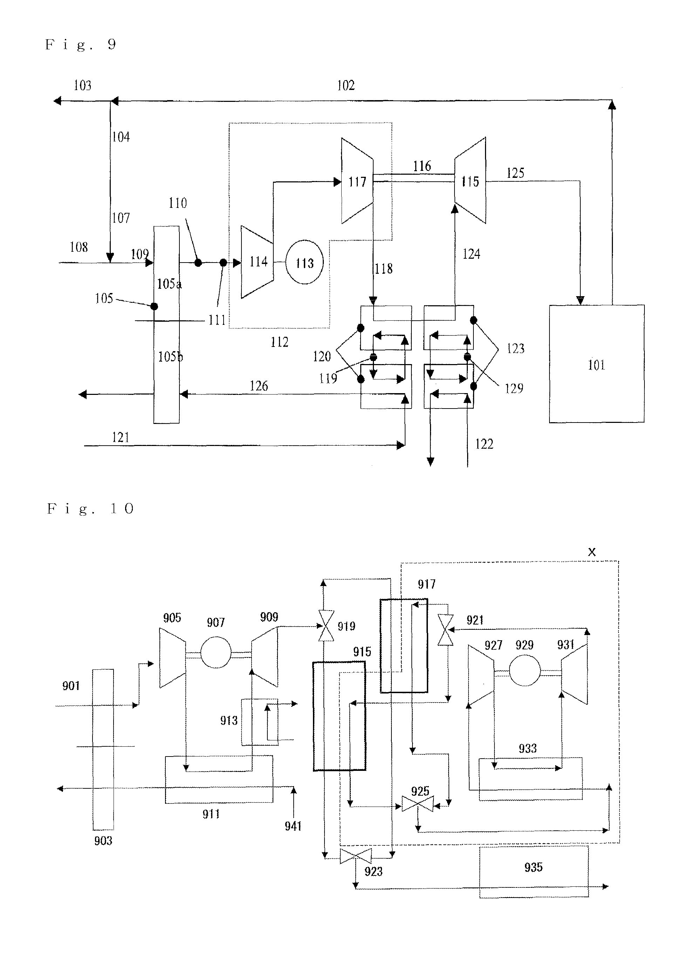

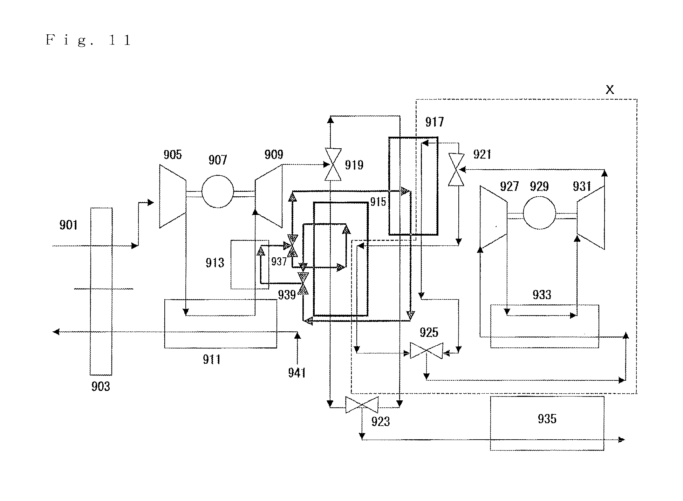

Fig. 1 is a flow sheet of an air cycle refrigerating and air conditioning system with control capability according to a first embodiment of the present invention.

Outside air 1 is led to the operating side 2a of a dehumidification rotor 2 for dehumidification and is then led, by way of a compressor 6, at least one heat exchanger, an expander 4 and a dehumidifier 18, into a cooled room 14. According to this embodiment, the outside air 11 may be passed into a waste heat-recovering heat exchanger 10. Heat of the waste heat-recovering heat exchanger 10 is recovered by the outside air 11. Also, according to this embodiment, the outside air may be passed into a cooled heat-recovering heat exchanger 13. Heat of the cooled heat-recovering heat exchanger 13 may be recovered by the air exhausted from the cooled room 14.

According to this embodiment, the compressor 6 and the expander 4 have the common stator 3 and are connected through a mechanism composed of a generator section 5 where the rotation shaft 4a of the expander 4 is coupled to a rotor 4b and a motor section 7 where the rotation shaft 6a of the compressor 6 is coupled to a rotor 6b. Electric power 5a generated in the generator section 5 and externally supplied electric power 7a are regulated by an electric power controller 8a for control on the basis of synchronous control, for example, to act as driving electricity (regulated electricity) 7b for rotating a generator motor 8. The generator motor 8 drives the compressor 6 thereby to compress the air to bring it at high temperature and under high pressure.

The waste heat-recovering heat exchanger 10 uses as a heat medium an intermediate medium (intermediate heat medium) 9 whose flow rate can be altered. By altering the flow rate of the intermediate medium 9, the amount of heat exchange may be controlled while heating the outside air 11 supplied to the waste heat-recovering heat exchanger 10 to a required temperature. The outside air heated to a high temperature is led to the regeneration side 2b of the dehumidification rotor 2 to dry the dehumidification rotor 2. Further, the exhaust air is fed to a water heater 21 to generate warm water 22.

The air cooled at the waste heat-recovering heat exchanger 10 is led to the cooled heat-recovering heat exchanger 13 in which the amount of heat exchange may be controlled by altering the flow rate of the intermediate medium (intermediate heat medium) 12, and cooled to a desired temperature by the returned air from the cooled room 14, before entering the expander 4. The air is expanded here to be brought at a low temperature and under a low pressure and passes through an dehumidifier 18 in which amount of dehumidification may be controlled by a filter 17 having a bypass mechanism 16, before entering the cooled room 14 to be brought at a predetermined temperature and humidity for providing for a heat load and humidity load.

According to this embodiment, since the rotation shaft 6a of the compressor 6 of the air cycle refrigerator is physically separated from the rotation shaft 4a of the expander 4, they can rotate independently at respective revolutions. As such, even if the temperature and heat load required in the cooled room change, the compressor and the expander can respectively operate at the most efficient revolutions so that improvement in electric power saving and cooling efficiency may be realized.

According to this embodiment, since electric power corresponding to the differential between the revolutions of the expander 4 and the compressor 6 is supplied as the generated electric power 5a along with the externally supplied electric power 7a to the motor for driving the compressor, the amount of electricity for driving the compressor may be saved and reuse of the energy of the expander 4 may be allowed for.

According to this embodiment, since the flow rates of the intermediate media 9 and 12 are adjustable, operating conditions can flexibly be adjusted irrespective of the change of predetermined temperatures in the cooled room or the variation of the outside air temperatures so that desired temperatures can efficiently be obtained. In addition, since the amount of heat exchange may be variable, the temperature of the cooled room may easily be maintained at a constant level even when the heat load and the outside air temperature vary.

According to this embodiment, by interposing the intermediate heat medium between the cooled heat-recovering heat exchanger and the waste heat-recovering heat exchanger of the air cycle refrigerator to control the amount of heat exchange, revolutions of the compressor and the expander at which the maximum efficiency is obtained, independently of the temperature and load of the cooled room, may be obtained. These, singly or in combination, can build an air cycle refrigerating/cold storage/air conditioning apparatus that is capable of accommodating a wide range of cooling temperatures and maintaining high efficiency no matter how one or more factors of the temperature of the cooled room, the outside air temperature and the heat load may vary.

As a variant of this embodiment, an embodiment in which a multistage adsorption rotor using zeolite is used as the dehumidification rotor 2 and the dehumidifier 18 is not included is mentioned. In this case, since the rotor has an extremely high capability of water absorption, most of the moisture content contained in the air to be introduced into the compressor 6 is adsorbed, with a result that the moisture content contained in the air will be at or lower than the dew point in the low-temperature air released from the expander 4. Even if the air is released from the expander 4, therefore, the problem of generating snow in the low-temperature air will not arise so that no dehumidifier 18 will be needed.

Some of the features of this embodiment will take effect even singly, and more, if in combination.

Fig. 2 is a flow sheet of a second embodiment according to the present invention in which an air cycle refrigerating and air conditioning system with control capability to which the present invention is applied is operated as a room-cooling air conditioner.

Returned air 102 from an air-conditioned room 101 is exhausted as exhaust air 103 while part 104 of the air is mixed with introduced outside air 108. The mixed air 109 is fed to the operating side 105a of a dehumidification rotor 105. Dehumidified air 110 is led into a compressor 117 which is driven in coordination with an expander 115 which is driven by a generator motor 113 having the identical mechanism with that of the embodiment 1, to be compressed to high-temperature and high-pressure air 118. This air is led to a waste heat-recovering heat exchanger 120 using as a heat exchange medium preferably an intermediate medium 119 whose flow rate is controllable, to be reduced in temperature by heating outside air 121 introduced therein. Further, the air may be fed to a cooled heat exchanger 123, cooled by outside air 122 and using as a heat exchange medium preferably an intermediate medium 129 whose flow rate is controllable. The air is cooled down to air 124 having a temperature moderately higher than that of the outside air, before being fed to the expander 115.

The air 124 maintains a high pressure, but through passage through the expander 115, will decrease its temperature and pressure to be air 125 whose temperature and humidity are controlled to desired levels, before being supplied to the air-conditioned room 101.

The outside air 121 heated by the waste heat-recovering heat exchanger 120 will be high-temperature air 126 and fed to the regeneration side 105b of the dehumidification rotor 105 for drying and evacuating the dehumidification rotor 105. The air 122 for cooling the cooled heat exchanger 123 will increase its temperature and be exhausted.

In place of the generator motor 113 applied in this case, other types of motors or engines may also be applied. When an engine is used, an exhaust turbine and a compressor and/or expander may be configured to be concentrically connected, for example (when both of them are concentrically connected, another compressor will be provided as shown in Fig. 9, for example, or alternatively, either one of them is concentrically connected, the other one will be rotated by other means for rotation such as a motor, for example).

According to this embodiment, since the outside air 126 heated by the waste heat-recovering heat exchanger 120 is used for drying the dehumidification rotor 105, the energy for dehumidification may be saved. Also, by dividing a heat exchanger for heat recovery into a cooled heat exchanger and a waste heat-recovering heat exchanger, part of the air may be cooled by outside air independent of the air of the cooling circulatory system. By interposing a flow rate-controllable intermediate medium between the heat exchangers, the air-conditioned room may be supplied with air whose temperature and humidity will not change.

According to this embodiment, since part of the air exhausted from the cooled room is again returned as air to be cooled, the air exhausted from the cooled room will have a temperature lower than that of the outside air so that cooling will be enabled with less energy and operation under the optimum conditions will be enabled by adjusting the amount of return based on the cooling load.

These, singly or in combination, can build an air cycle air conditioning apparatus that advantageously withstands variation in load and outside air temperature.

Fig. 3 shows an air cycle refrigerating and air conditioning system or a room-cooling air conditioner with control capability according to a third embodiment of the present invention. According to this embodiment, it is characteristic that a dehumidification rotor 105 is provided with a bypass pathway 106.

Elements identical with those in Fig. 2 will be given the same reference numerals and their description will be dispensed with. According to this embodiment, part of the whole returned air 102 from an air-conditioned room 101 is exhausted as exhaust air 103, the remaining air being as returned air 14, part of which is being as bypassed air 106 for a dehumidification rotor 105, the remaining air 107 and introduced outside air 108 being mixed and fed as dehumidified air 109 to the operating side 105a of the dehumidification rotor 105 for dehumidification. Dehumidified air 110 will have an increased temperature and will be mixed with the bypassed air 106 of the dehumidification rotor to be mixed air 111 having a moderately increased humidity and a decreased temperature, before being led by way of a compressor, a heat exchanger and an expander as already described for the second embodiment to the air-conditioned room.

According to this embodiment, since the bypassed air 106 is introduced to the dehumidified air 110, the flow rate of the air to be fed to the operating side 105a will be low so that the dehumidification rotor 105, a bulky component in the system, may be downsized to allow for downsizing of the system and reduction of the cost. Also, admixture of the bypassed air lowers the temperature of the air to be led to a compressor 117, thereby reducing the power for the compressor and saving energy for the refrigerator.

Fig. 4 shows a variant of the second and third embodiments according to the present invention and is a flow sheet in which the air cycle air conditioning system with dehumidification capability of those embodiments (Fig. 2 and Fig. 3) is operated as a humidifying and room heating system. This variant operates in the same manner as the system of the second or third embodiment of Fig. 2 or Fig. 3, except the respects to be described below.

The second and third embodiments are dehumidifying and room cooling systems for lowering the temperature of a room of interest as well as dehumidifying, while this variant is a humidifying and room heating system for increasing the temperature of a room of interest as well as humidifying. In order to realize the difference, according to this variant, dehumidified and cooled exit air 125 of an expander is exhausted for no use and, instead, exit air 127 warmed through a heat exchanger 120 and humidified through a dehumidification rotor 105 is led to an air-conditioned room 101 for humidifying and heating the room. Exit air 126 not passed through the dehumidification rotor 105 may also be led into the air-conditioned room.

This variant may be integrated with the third embodiment. In this case, a selector valve (not shown) for selectively introducing into the cooled room 101 the dehumidified and cooled exit air 125 of the expander 115 or the humidified and warmed exit air 127 of the dehumidification rotor 105. Such a selector valve may be a well known selector valve having function of selecting either one of air inputs from the two input routes or of mixing them at an appropriate ratio. Also, as air to be selected by the valve, the exit air 126 not passed through the dehumidification rotor 105 may be used.

Fig. 5 is a flow sheet showing an air cycle air conditioning and refrigerating apparatus with dehumidifying capability according to a fourth embodiment of the present invention operated as a refrigerating and cold storage apparatus.

Returned air 502 from a refrigerating/cold storage warehouse 501 is led to a cooled heat-recovering heat exchanger 504 using as a heat exchanging medium an intermediate medium 503 whose flow rate is controllable, to be air 505 having an increased temperature. The air 505 is then led to a compressor 511 driven in coordination through a shaft 510 with an expander 509 driven by a generator motor or typical motor or an engine 506 according to the embodiment 1 of the present invention, to be further compressed to be high-temperature and high-pressure air 512. This air is then led to a waste heat-recovering heat exchanger 514 using as a heat exchanging medium an intermediate medium 513 whose flow rate is controllable, to lower its temperature by heating outside air 515. In addition, preferably, it is fed to the cooled heat-recovering heat exchanger 504 which is cooled by the returned air 502 and uses as a heat exchanging medium the intermediate medium 503 whose flow rate is controllable, to be cooled. The air is turned into air 516 having a temperature moderately higher than the temperature inside the refrigerated warehouse 501 and is then fed to the expander 509. The air 516 maintains a high pressure and drives the expander 509 to lower its temperature and pressure. Thereafter, the air is preferably passed through the dehumidifier 507 which controls the amount of dehumidification and is then fed to the refrigerated warehouse 501 to be refrigerated.

The outside air 515 heated by the waste heat-recovering heat exchange 514 is turned into high-temperature air 518 and fed to the regeneration side 519b of a dehumidification rotor 519 for drying the dehumidification rotor 519, before being exhausted. The returned air 502 heated at the cooled heat exchanger 504 is turned into a high-temperature air and returned to the compressor 511.

A prechamber 520, adjacent to the refrigerating warehouse, having a temperature higher than that in the warehouse, is supplied with cold air 521 from the refrigerated warehouse 501 by an air-supplying fan 522. By this way, the air absorbs a heat load (an amount of heat to be cooled per unit time, for example, a value such as 3000 kilocalories per hour) to be ventilated air 523, before being returned to the refrigerated warehouse 1 by a ventilating fan 524. Most of returned air 525 from the prechamber 520 is led to the air-operated side 519a of the dehumidification rotor to be dehumidified. As a result, it will be low-humidity air 526, which is then led to a cooled heat exchanger 529 which is cooled by outside air 528 and uses as a heat exchange medium an intermediate heat exchange medium 527 whose flow rate is controllable, before being led to the prechamber 520 at a temperature moderately higher than the outside air temperature. In this way, this air will be cooled by the cold air 521 and simultaneously will provide for a humidity load (an amount of moisture content to be dehumidified per unit time).

According to this embodiment, since low-humidity air enters the prechamber 520, even if moisture infiltrates from outside or moisture is generated by perspiration of human operators, an increase of humidity in the room may be suppressed and the humidity of the room may always be maintained at a constant level. As a result, dew condensation in the room may be prevented.

According to this embodiment, the waste heat-recovering heat exchanger may be cooled by outside air independent of the air of a cooling circulatory system. In addition, according to this embodiment, an intermediate heat medium whose flow rate is controllable is interposed as a heat exchange medium between the cooled heat-recovering heat exchanger and the waste heat-recovering heat exchanger. In this way, air whose temperature will not change may be fed to a refrigerated/cold room and air whose humidity will not change may be fed to a prechamber or the like of the refrigerated/cold room, so that an air cycle refrigerating/cold storage apparatus capable of flexibly accommodating load variation and outside air temperature variation may be built.

According to this embodiment, a humidity at which no dew condensation or icing occurs and a humidity appropriate for the type of freight may be obtained. According to this embodiment, since the dehumidification rotor 519 is dried by the heat of waste heat recovery, an appropriate humidity may efficiently be obtained.

Fig. 6 shows a variant of the fourth embodiment. According to this embodiment, it is characteristic that the cooled heat exchanger 525 is replaced with a rotary sensible heat rotor 530. Low-humidity air 525 is fed to the high-temperature side 530a of the sensible heat rotor 530 while outside air 528 is fed to the low-temperature side 530b of the sensible heat rotor 530 for heat exchange.

In general, a sensible heat rotor is more efficient than a cooled heat exchanger and, according to this variant, is capable of further lowering the temperature of cooled air.

Fig. 7 shows a cooling system according to a fifth embodiment of the present invention. In this embodiment, the system of the first embodiment (see Fig. 1) is utilized for a refrigerating and cold storage warehouse and heat pipes 719 and 720 having a medium which vaporizes at the high-temperature side and condenses at the low-temperature side as an intermediate medium for a waste heat-recovering heat exchanger 710 and a cooled heat-recovering heat exchanger 713 are adopted. In this way, the system can be simplified and a reduction in price and size of the apparatus may be realized. In the drawing, 702 denotes a compressor, 704 denotes an expander, 708 denotes a generator motor, 711 denotes outside air/cooling water/supplied water, 714 denotes a refrigerated warehouse and 718 denotes a dehumidifier.

Fig. 8 shows schematic drawings of the cooling system of Fig. 7 as applied to a refrigerating and cold storage container. This embodiment is to be placed in the container in an arrangement, for example, as shown in Fig. 8 (left-hand drawing). The right-hand drawing of the figure is a sectional view of the container. It is characteristic that low-temperature air is blown into a cold air blowing passage 820 arranged on the inner surface of the refrigerating and cold storage container so that the cold air is not directly blown into the container, but instead, that cooled heat is once transferred to a cooled heat radiator plate 821 and then transferred from the cooled heat radiator plate 821 now cooled to refrigerated and cold-stored freight 822 in the container. In the drawing, 804, 806 and 808 denote generator motor-driven air compressor/expander units, 810 denotes a heat pipe air cooler and 813 denotes a heat pipe cooled heat-recovering heat exchanger.

According to this embodiment, since cold air does not directly impinge on refrigerated and cold-stored freight, the freight may evenly be cooled.

Fig. 9 shows a variant of the system according to the second embodiment (see Fig. 2) of the present invention. According to this system, it is characteristic that, unlike the second embodiment wherein air to be cooled is directly led to the compressor 117, the air is once precompressed by a booster 114 before being led to the compressor 117. In other words, for this variant, air is compressed in two stages by a two-stage air compression mechanism 112 composed of the booster 114 and the compressor 117. The booster 114 is driven by a typical motor or engine 113 which is in turn driven by the expander 115.

Such a two-stage air compression mechanism is also applicable to the third to sixth embodiments.

By carrying out a two-stage air compression as in this variant, the compressor 117 and the expander 115 may directly be coupled to simplify the mechanism. In this case, since the compressor 117 and the expander 115 rotate at the same revolution, even if the expander is operated at the optimum revolution, the optimum efficiency may not always be obtained; however, since the booster 114 rotates at a revolution different from that of the compressor 117, it can rotate with the optimum efficiency. As a result, the two-stage air compression mechanism 112 as a whole can obtain the optimum efficiency.

Next, with reference to Fig. 10, a cooling system according to a sixth embodiment of the present invention will be described in detail. Usually, when a food is quick-frozen, cold air is blown to it. In so doing, since the matter to be frozen has oil and fat content, microparticulate oil and fat will be mixed into the blown cold air. As the cold air is then returned into the cooling system, the oil and fat components will adhere to fans, pipes and others, causing proliferation of molds and fungi. This cooling system is configured in such a way that dry air having a cryogenic temperature may be obtained without returning the cooled air in the freezer into the system. In the drawing, 901 and 941 denote outside air, 903 denotes a dehumidification rotor, 905 and 927 denote compressors, 907 and 929 denote generator motors of the same mechanism with the embodiment 1, 909 and 931 denote expanders, 911 denotes a waste heat-recovering heat exchanger, 913 denotes a cooled heat-recovering heat exchanger, 915 and 917 denote dehumidifying and freezing apparatuses, 919, 921, 923 and 925 denote selector valves, 933 denotes a heat exchanger and 935 denotes a freezer. Since other components (for example, the dehumidification rotor, compressor, heat exchanger, expander and so on) are not different from those of the other embodiments described above, except that the cooled air in the freezer is not returned into the system and except the features to be subsequently detailed, their description will be dispensed with.

A first feature of this system is that dehumidifying and freezing apparatuses 915 and 917 capable of cooling the low-temperature air exhausted from the expander 909 further to a cryogenic temperature are provided. The dehumidifying and freezing apparatuses 915 and 917 are configured in such a way that through the introduction of cryogenic air (for example, at -80°C, that is, the temperature as released from the expander 931) circulating in the air cycle refrigerator (cycle X), the low-temperature air (for example, at 0°C, 3.5 g (water)/kg (air)) released from the expander 909 is cooled by heat exchange. In the course of the low-temperature air being cooled to an ultralow temperature, the moisture content above the dew point of that contained in the low-temperature air builds up as snow in the dehumidifying and freezing apparatuses 915 and 917. In this way, the ultralow-temperature air (for example, at -70°C) exhausted from the dehumidifying and freezing apparatuses 915 and 917 are turned into dry air which only contains a moisture content at or below the dew point at that temperature (for example, 0.03 g (water)/kg (air) at -70°C).

A second feature of this system is that it has multiple (for example, two) dehumidifying and freezing apparatuses such as 915 and 917 as described above and that they are switchable. As described for the first feature, the principle of freezing the moisture content above the dew point in the dehumidifying and freezing apparatuses by cooling the air to a cryogenic temperature in the dehumidifying and freezing apparatuses is adopted. In this context, as the operation continues, snow and ice will build up in the dehumidifying and freezing apparatuses, resulting in a closure of the pathway to disable the operation. In order to enable a continued operation in such a condition, according to this system, multiple dehumidifying and freezing apparatuses (the dehumidifying and freezing apparatuses 915 and 917) are provided, which are configured in such a manner that, as a result of operation of one of the dehumidifying and freezing apparatuses, when ice has built up in that one dehumidifying and freezing apparatus, the cooling line may be switched to the other dehumidifying and freezing apparatus in which no ice has built up. Specifically, the switching may be made by the operation of selector valves 919, 921, 923 and 925 and, by switching of these valves, the cryogenic air from the expander 931 is introduced into either one of the dehumidifying and freezing apparatuses 915 and 917.

Next, Fig. 11 shows a variant of the sixth embodiment. While one of the dehumidifying and freezing apparatuses is in operation, the other dehumidifying and freezing apparatus must be thawing the ice inside in preparation for the next use. As such, this variant is configured in such a manner that the waste heat from the heat exchanger in the cooling system is utilized for defrosting. By such configuration, the ice in the dehumidifying and freezing apparatuses is thawed in a shorter period of time to make them switchable and to downsize the dehumidifying and freezing apparatuses. In addition, since the air compressed in the compressor 905 is heat-exchanged in the heat exchanger 913 with the ultralow-temperature air in the dehumidifying and freezing apparatuses, the air before introduction into the expander 909 may be cooled down to a very low temperature.

In the drawing, 937 and 939 denote selector valves. By switching the valves, the air heat-exchanged in the cooled heat-recovering heat exchanger 913 will be led to one of the dehumidifying and freezing apparatuses 915 and 917 which is not in operation.

In the embodiments as shown in Fig. 10 and Fig. 11, the air (the third air) to be introduced into the compressor (the second compressor) 927 is the returned air from the dehumidifying and freezing apparatus 915 or 917; however, the air may be outside air, for example. In this case, by combining multiple (for example, five) units each consisting of a compressor, a heat exchanger and an expander, cryogenic air may be obtainable (usually, able to reduce a temperature for 25 to 30°C per unit). In addition, in the embodiments of Fig. 10 and Fig. 11, the generator motors 907 and 929 of the same mechanism with the embodiment 1 are adopted; however, one or both of them may be replaced with a two-stage compression mechanism (the booster 114 and the compressor 117, etc.) of Fig. 9.

In this specification, refinements to be applied to an air conditioning system were described on the basis of several embodiments. By appropriate combination of the features of these embodiments, an air conditioning system having multiple advantages may be obtained and such an air conditioning system is well within the range of the present invention. Also in this specification, for convenience of description, effects of each embodiment were described and it is, however, needless to say that an embodiment not having such effects will fall under the range of the present invention.

### BRIEF DESCRIPTION OF THE DRAWINGS

Fig. 1 is a drawing of an air cycle refrigerating/air conditioning system with control capability according to a first embodiment of the present invention;
Fig. 2 is a flow diagram of an air cycle air conditioning system with dehumidifying capability according to a second embodiment of the present invention (for dehumidifying and cooling a room);
Fig. 3 is a flow diagram of an air cycle air conditioning system with dehumidifying capability according to a third embodiment of the present invention (for dehumidifying and cooling a room);
Fig. 4 is a flow sheet of an air cycle air conditioning system with dehumidifying capability according to a variant of the third embodiment of the present invention (for humidifying and heating a room);
Fig. 5 is a flow diagram of an air cycle refrigerating/cold storage system with dehumidifying capability according to a fourth embodiment of the present invention;
Fig. 6 is a flow diagram of an air cycle refrigerating/cold storage system with dehumidifying capability according to a variant of the fourth embodiment of the present invention;
Fig. 7 is a flow diagram of an air cycle refrigerating/cold storage system with dehumidifying capability according to a fifth embodiment of the present invention;
Fig. 8 shows schematic views of the system according to the fifth embodiment of the present invention as mounted to a refrigerating system;
Fig. 9 is a flow diagram of an air cycle refrigerating/cold storage system according to a variant of the second embodiment of the present invention;
Fig. 10 is a flow diagram of an air cycle refrigerating/cold storage system with dehumidifying capability according to a sixth embodiment of the present invention; and
Fig. 11 is a flow diagram of an air cycle refrigerating/cold storage system with dehumidifying capability according to a variant of the sixth embodiment of the present invention.

### Designation of Reference Numerals

1: outside air, 2: dehumidification rotor, 2a: operating side of dehumidification rotor, 2b: regeneration side of dehumidification rotor, 3: stator, 4: expander, 4a: rotation shaft of expander, 4b: rotor of expander, 5: generator section, 5a: generated electric power, 6: compressor, 6a: rotation shaft of compressor, 6b: rotor of compressor, 7: motor section, 7a: supplied electric power, 7b: adjusted electric power, 8: generator motor, 8a: electric power controller, 9: intermediate heat medium, 9a: intermediate heat medium, 10: waste heat-recovering heat exchanger, 11: outside air, 12: water heater, 13: cooled heat-recovering heat exchanger, 14: cooled room, 915 and 917: dehumidifying and freezing apparatuses, and 919, 921, 923, 925, 937 and 939: selector valves

## Claims

1. An air conditioning system comprising a compressor into which a first air is introduced, a heat exchanger into which the first air compressed by the compressor is introduced, and an expander into which the first air heat-exchanged by the heat exchanger is introduced and which is connected with the compressor through a connection mechanism, the air conditioning system further comprising a dehumidifier therewithin, wherein moisture content of a dehumidifying agent in the dehumidifier is decreased by a second air heat-exchanged with the first air by the heat exchanger.

2. The air conditioning system according to Claim 1, wherein the first air dehumidified by the dehumidifier is introduced into the compressor.

3. An air conditioning system comprising a compressor into which a first air is introduced, a heat exchanger into which the first air compressed by the compressor is introduced, and an expander into which the first air heat-exchanged by the heat exchanger is introduced and which is connected with the compressor through a connection mechanism, the air conditioning system further comprising a dehumidifier therewithin, wherein an air having a temperature lower than the temperature of the first air is mixed with the first air before the first air is introduced into the compressor.

4. The air conditioning system according to Claim 3, wherein the first air dehumidified by the dehumidifier is introduced into the compressor.

5. The air conditioning system according to Claim 3 or 4, wherein the air having a lower temperature is introduced from a space to be air-conditioned by the air conditioning system.

6. An air conditioning system comprising a compressor into which a first air is introduced, a heat exchanger into which the first air compressed by the compressor is introduced, and an expander into which the first air heat-exchanged by the heat exchanger is introduced and which is connected with the compressor through a connection mechanism, the air conditioning system further comprising a dehumidifier therewithin and a selector valve for selectively introducing into a space to be air-conditioned either a second air heat-exchanged with the first air by the heat exchanger or the first air exhausted from the expander.

7. The air conditioning system according to Claim 6, wherein the first air dehumidified by the dehumidifier is introduced into the compressor.

8. The air conditioning system according to Claim 6 or 7, wherein the second air is one that has been introduced into the dehumidifier and decreased moisture content of a dehumidifying agent.

9. An air conditioning system comprising a first compressor into which a first air is introduced, a first heat exchanger into which the first air compressed by the first compressor is introduced, and a first expander into which the first air heat-exchanged by the first heat exchanger is introduced and which is connected with the first compressor through a connection mechanism, the air conditioning system further comprising a second compressor into which a third air is introduced, a second heat exchanger into which the third air compressed by the second compressor is introduced, a second expander into which the third air heat-exchanged by the second heat exchanger is introduced and which is connected with the second compressor through a connection mechanism, first and second dehumidifying freezers, into which the first air expanded by the first expander and the third air expanded by the second expander may be introduced, and which are configured to be capable of mixing the first air and the third air to solidify moisture content contained in the air mixed, and a selector valve for enabling either one of the first and second dehumidifying freezers to operate.

10. The air conditioning system according to Claim 9, wherein heat generated in the air conditioning system is utilized to thaw moisture content solidified in one of the dehumidifying freezers that is not in operation.

11. The air conditioning system according to Claim 10, wherein the heat is from a second air heat-exchanged with the first air by the first heat exchanger or from an air heat-exchanged with the third air by the second heat exchanger.

12. The air conditioning system according to any one of Claims 9 to 11, further comprising a dehumidifier therewithin, wherein moisture content of a dehumidifying agent in the dehumidifier is decreased by the second air heat-exchanged with the first air by the first heat exchanger.

13. The air conditioning system according to any one of Claims 9 to 12, wherein the first air dehumidified by the dehumidifier is introduced into the compressor.

14. The air conditioning system according to any one of Claims 1 to 13, wherein the connection mechanism comprises a stator in common to the compressor and the expander, a first shaft inserted into the stator through the compressor, and a second shaft inserted into the stator through the expander, capable of rotating at a rotation speed different from that of the first shaft.

15. The air conditioning system according to Claim 14, wherein at least part of electric power generated at the stator by rotation of the second shaft is supplied to the stator for rotation of the first shaft.

16. The air conditioning system according to any of Claims 1 to 13, comprising at least two of the compressor, wherein the connection mechanism is configured in such a manner that one of the compressors rotates at the same revolution with the expander.

17. The air conditioning system according to any one of Claims 1 to 16, wherein the heat exchanger contains an intermediate medium whose flow rate is controllable.

18. An air conditioning system comprising an air conditioning mechanism comprising a compressor into which a first air is introduced, a heat exchanger into which the first air compressed by the compressor is introduced, and an expander into which the first air heat-exchanged by the heat exchanger is introduced and which is connected with the compressor through a connection mechanism, the air conditioning system further comprising a dehumidifier therewithin and means for supplying dehumidified air to at least one of at least two compartments, in which airs being different at least in temperature or humidity are exchanged, of an air-conditioned room to which the air conditioning system is applied.

19. The air conditioning system according to Claim 18, wherein the first air dehumidified by the dehumidifier is introduced into the compressor.
